# EUROPEAN PATENT SPECIFICATION

(11) **EP 3 226 395 B1**
(45) Date of publication and mention of the grant of the patent: **21.08.2019**
(21) Application number: 17164333.1
(22) Date of filing: 31.03.2017
(51) Int. Cl.: H02M 1/36, B60L 3/00, H02M 1/00, H02M 3/335

(54) **PRE-CHARGING CIRCUIT, DC-DC CONVERTER AND HYBRID VEHICLE**
VORLADESCHALTUNG, GLEICHSPANNUNGSWANDLER UND HYBRIDFAHRZEUG
CIRCUIT DE PRÉCHARGE, CONVERTISSEUR CC-CC ET VÉHICULE HYBRIDE

(30) Priority: 31.03.2016 CN 201610196260
(43) Date of publication of application: 04.10.2017
(73) Proprietor: Valeo Interior Controls Co., Ltd., Shenzhen, Guangdong 518103 (CN)
(72) Inventor: LIU, Bo, Shenzhen, Guangdong 518103 (CN); GUO, Zhiling, Shenzhen, Guangdong 518103 (CN)
(74) Representative: Mozelle, Gérard Jacques

(56) References cited:
- EP-A2- 2 434 609
- DE-A1-102012 212 122
- US-A1- 2010 207 579
- US-A1- 2012 229 061
- US-A1- 2014 368 160

## Description

### Technical field

The embodiments of this disclosure relate to a pre-charging circuit for a direct current (DC)-DC converter, a DC-DC converter which converts a voltage between a first power supply and a second power supply, and a hybrid vehicle comprising the DC-DC converter.

### Background art

In a hybrid vehicle, in order to use high-power loads such as electric compressors, electric heaters, power steering and electric pumps, an additional 48 V battery system level is defined. A DC-DC converter must be arranged between the 48 V battery system and 14 V battery system.

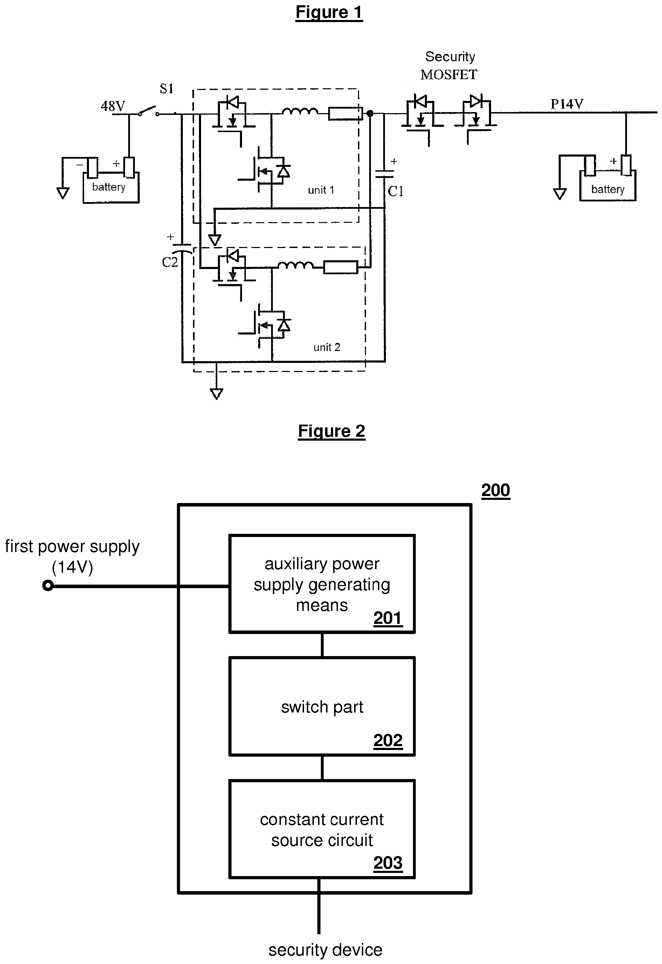

Fig. 1 shows a schematic diagram of a DC-DC converter connected between the 48 V battery system and the 14 V battery system, wherein unit 1 and unit 2 are two main circuits of the DC-DC converter. In the circuit connection, if switch S1 is closed when there is no voltage on capacitor C2, an arc discharge effect will occur. To reduce this arc discharge effect as much as possible, a pre-charging function is generally needed, i.e. capacitor C2 is first pre-charged from 0 V to 48 V, then switch S1 is closed to begin transferring power.

Document DE 10 2012 212 122 A1 discloses a pre-charge circuit comprising a constant current source, which charges a DC-link capacitor up to a predefined voltage level, before a switch between a voltage source and the DC-link capacitor is closed.

Document US 2014/0368160 A1 discloses a control device comprising MOSFETs for charging a battery system. When charging a battery system, at least one MOSFET of the control device is turned on.

The pre-charging process of C2 is split into two stages. In the first stage, C1 and C2 are charged from 0 V to 14 V; and in the second stage, C2 is further charged to 48 V. With regard to the first stage, if a security MOSFET is turned on when the voltages on C1 and C2 are 0 V, the problem of magnetizing inrush current will occur. Due to the restrictions of the safe operating area (safety operation area, SOA) thereof, the magnetizing inrush current is very dangerous to the security MOSFET.

Thus, there is a need for a mechanism which can limit magnetizing inrush current in the first stage of the C2 pre-charging process.

### Content of the invention

A system comprising the features according to independent apparatus claim 1 is disclosed.

In one example, the auxiliary power supply generating means comprises a half-wave rectification circuit, and a reference ground of the auxiliary power supply is a positive terminal of the first power supply.

In one example, the half-wave rectification circuit comprises: a floating winding, a first terminal of the floating winding being connected with the first power supply and a second terminal of the floating winding being connected with an anode of a first diode; the first diode, a cathode of the first diode being connected with the switch part; and a capacitor connected between the first terminal of the floating winding and the cathode of the first diode.

In one example, the auxiliary power supply generating means is a secondary side of a flyback converter, and a primary side of the flyback converter is connected to the first power supply.

In one example, the constant current source circuit comprises: a first resistor, a first terminal thereof being connected to the switch part and a second terminal of the first resistor being connected to a control terminal of a first transistor; a second resistor, a first terminal thereof being connected to a second terminal of the first transistor and a second terminal of the second resistor being connected to a control terminal of a second transistor; a third resistor, a first terminal thereof being connected to the second terminal of the first transistor and a second terminal of the third resistor, as the output terminal of the constant current source circuit, being connected to the security device; the first transistor, a first terminal thereof being connected to the first terminal of the first resistor; and the second transistor, a first terminal thereof being connected to the second terminal of the first resistor and a second terminal of the second transistor being connected to the second terminal of the third resistor.

In one example, the switch part comprises: a third transistor, a first terminal thereof being connected to the constant current source circuit, a second terminal of the third transistor being connected to the auxiliary power supply generating means and a control terminal of the third transistor being connected to a first control signal; a fourth transistor, a second terminal thereof being connected to a reference ground and a control terminal of the fourth transistor being connected to a second control signal; and a fourth resistor and a fifth resistor, connected between the second terminal of the third transistor and a first terminal of the fourth transistor in series.

In one example, the security device comprises two common-source security metal oxide semiconductor field effect transistors (MOSFETs), and the output terminal of the constant current source circuit is connected to a middle point of the two security MOSFETs.

In one example, both of the first and second transistors are NPN type transistors, the third transistor is a PMOS type transistor and the fourth transistor is a NMOS type transistor.

According to another embodiment of this disclosure, a hybrid vehicle comprising the system described above is also provided.

Thus, the pre-charging circuit according to an embodiment of this disclosure comprises a constant current source circuit, and can reduce the maximum current during charging, and thereby solve the problem of magnetizing inrush current.

### Description of the accompanying drawings

The following detailed description, which is aided by the accompanying drawings, will enable the present invention to be understood more easily, wherein identical labels designate units with the same structure, and wherein:
Fig. 1 shows a schematic diagram of a DC-DC converter connected between the 48 V battery system and the 14 V battery system;
Fig. 2 shows a schematic block diagram of a pre-charging circuit for a DC-DC converter according to an embodiment of this disclosure;
Fig. 3 shows a schematic diagram of a specific circuit of a DC-DC converter and a pre-charging circuit according to an embodiment of this disclosure; and
Fig. 4 shows a timing diagram according to an embodiment of this disclosure.

### Particular embodiments

The technical solutions in embodiments of the present invention are described clearly and fully below in conjunction with the accompanying drawings in embodiments of the present invention. Clearly, the embodiments described are some, not all, of the embodiments of the present invention. All other embodiments obtained by those skilled in the art on the basis of the embodiments in the present invention without expending any inventive effort shall fall within the scope of protection of the present invention.

Fig. 2 shows a schematic block diagram of a pre-charging circuit 200 for a DC-DC converter according to an embodiment of this disclosure.

As Fig. 2 shows, the pre-charging circuit 200 comprises an auxiliary power supply generating means 201, a constant current source circuit 203 and a switch part 202.

The auxiliary power supply generating means 201 is connected to a first power supply, e.g. 14 V, and configured to generate an auxiliary power supply. The constant current source circuit 203 is configured to supply a charging current to the outside based on the auxiliary power supply. The switch part 202 is connected between the auxiliary power supply generating means 201 and the constant current source circuit 203. An output terminal of the constant current source circuit 203 is connected to a security device of the DC-DC converter.

Thus, the pre-charging circuit according to an embodiment of this disclosure comprises a constant current source circuit, and can reduce the maximum current during charging, and thereby solve the problem of magnetizing inrush current.

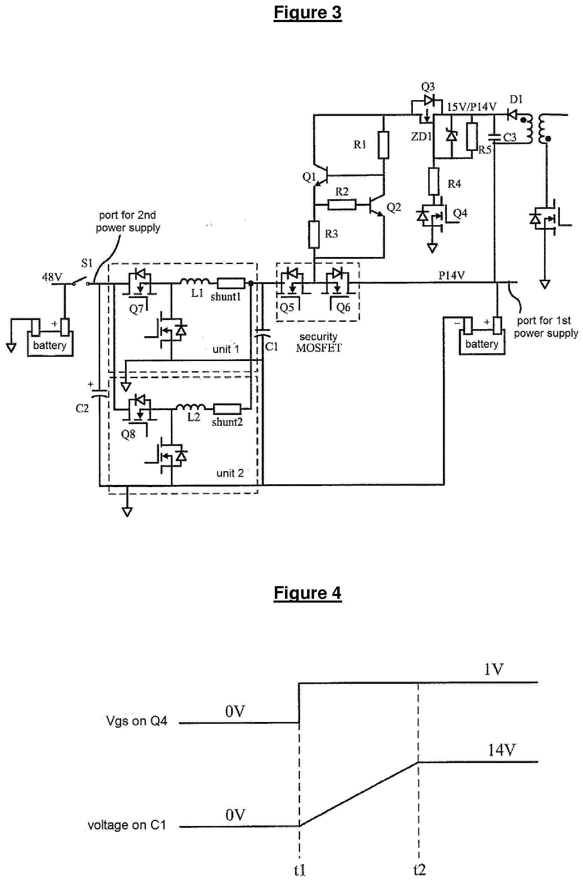

Fig. 3 shows a schematic diagram of a specific circuit of a DC-DC converter and a pre-charging circuit according to an embodiment of this disclosure.

As shown in Fig. 3, the auxiliary power supply generating means 201 may comprise a half-wave rectification circuit, and a reference ground of the auxiliary power supply is a positive terminal of the first power supply (14 V) .

The half-wave rectification circuit may comprise a floating winding, a first diode D1 and a capacitor C3.

A first terminal of the floating winding is connected with the first power supply and a second terminal of the floating winding is connected with an anode of the first diode D1. A cathode of the first diode D1 is connected with the switch part 202. The capacitor C3 is connected between the first terminal of the floating winding and the cathode of the first diode D1.

As shown in Fig. 3, the auxiliary power supply generating means 201 may be a secondary side of a flyback converter, and a primary side of the flyback converter is connected to the first power supply (14 V). The auxiliary power supply generating means 201 draws power from the primary side of the flyback converter, in order to provide an auxiliary power supply. In other words, the primary side of the flyback converter draws power from the first power supply 14 V, in order to supply energy to the auxiliary power supply generating means 201, in order to transfer the auxiliary power supply.

The auxiliary power supply generating means 201, on the basis of the first power supply (14 V), can generate a false voltage signal of 15 V/P14 V; the voltage of this false voltage signal relative to ground may be 15 V + 14 V = 29 V. Using the auxiliary power supply generating means 201, the capacitor C1 may be charged to a voltage equal to the first power supply, i.e. 14 V. Otherwise, the 14 V battery system charges C1 and C2 directly, but due to a voltage drop on the constant current source circuit 203, when the first stage ends, the voltage of C1 cannot attain the voltage of the first power supply; the result is that when the security device is turned on, the problem of magnetizing inrush current will still occur.

The constant current source circuit 203 may comprise a first resistor R1, a second resistor R2, a third resistor R3, a first transistor Q1 and a second transistor Q2.

A first terminal of the first resistor R1 is connected to the switch part 202 and a second terminal of the first resistor is connected to a control terminal of the first transistor Q1. A first terminal of the second resistor R2 is connected to a second terminal of the first transistor Q1 and a second terminal of the second resistor R2 is connected to a control terminal of the second transistor Q2. A first terminal of the third resistor R3 is connected to the second terminal of the first transistor Q1 and a second terminal of the third resistor, as the output terminal of the constant current source circuit 203, is connected to the security device. A first terminal of the first transistor Q1 is connected to the first terminal of the first resistor R1. A first terminal of the second transistor Q2 is connected to the second terminal of the first resistor R1, and a second terminal of the second transistor Q2 is connected to the second terminal of the third resistor R3.

The security device may comprise two common-source security MOSFETs, and the output terminal of the constant current source circuit 203 is connected to a middle point, i.e. the sources, of the two security MOSFETs. The two security MOSFETs may be N type MOSFETs.

During pre-charging, the volume of current flowing through the constant current source circuit 203 is limited to an acceptable level by the third resistor R3. For example, R3 may be 5.1 Ω, and the output current of the constant current source circuit 203 will be limited to 0.7 V/5.1 Ω = 137 mA. The first transistor Q1 may be a SOT 223 package, enabling power loss and dissipation on the third resistor R3 to be calculated according to a charging current value, and a package suitable for R3 to be chosen. For example, if the power loss on R3 is about 96 mW, a 0805 package chip resistor can be selected. The output terminal of the constant current source circuit 203 is connected to the source terminals of the two common-source MOSFETs Q5 and Q6, and a charging current flows through the body diodes of Q5 and Q6. The charging process will be described in detail below with reference to the accompanying drawings.

The switch part 202 may comprise a third transistor Q3, a fourth transistor Q4, a fourth resistor R4 and a fifth resistor R5.

A first terminal of the third transistor Q3 is connected to the constant current source circuit 203, a second terminal of the third transistor is connected to the auxiliary power supply generating means 201 and a control terminal of the third transistor is connected to a first control signal CON1. A second terminal of the fourth transistor Q4 is connected to a reference ground and a control terminal of the fourth transistor is connected to a second control signal CON2. The fourth resistor R4 and fifth resistor R5 are connected between the second terminal of the third transistor Q3 and a first terminal of the fourth transistor Q4 in series.

The third transistor Q3 and fourth transistor Q4 serving as switches are controlled by the first control signal CON1 (not shown) and second control signal CON2 (not shown) respectively. The first control signal CON1 and second control signal CON2 may be realized using software, hardware or firmware. The voltage on the fourth resistor R4 and fifth resistor R5 is equal to the voltage 14 V of the first power supply plus the voltage generated by the auxiliary power supply generating means 201, i.e. 15 V + 14 V = 29 V. When the fourth transistor Q4 is controlled to turn on by the second control signal CON2, the fourth resistor R4 and fifth resistor R5 ensure that the voltage on R4 is no greater than the maximum gate-source voltage Vgs of the third transistor Q3, and at the same time, can also limit the current on the fourth transistor Q4. ZD1 is a Zener diode, which is used to ensure that the gate-source voltage Vgs of the third transistor Q3 does not exceed the maximum voltage tolerance value thereof, and thus serves a protective function. When pre-charging is completed due to a leakage circuit, the fourth transistor Q4 is controlled to turn off by the second control signal CON2.

In one example, the first transistor Q1 and second transistor Q2 are NPN type transistors, the third transistor Q3 is a PMOS type transistor and the fourth transistor Q4 is a NMOS type transistor.

Thus, the control terminal of first transistor Q1 and second transistor Q2 is the base thereof, the first terminal is the collector and the second terminal is the emitter. The control terminal of the third transistor Q3 and fourth transistor Q4 is the gate, the first terminal is one of the source and the drain, and the second terminal is the other of the source and the drain.

Those skilled in the art may select any suitable model number and specific value for the abovementioned assemblies according to design requirements, and are not restricted to the examples above.

In addition, although only unit 1 and unit 2 are shown in Fig. 3, those skilled in the art should understand that the number of main circuits of the DC-DC converter is not limited to two, but could be more or less.

Most pre-charging functions are realized using series-connected large switches and resistors. Such circuits have a short charging time but a high cost. The pre-charging circuit according to an embodiment of this disclosure has a long charging time, can reduce the magnetizing inrush current, and has a lower cost.

The specific charging process will now be further explained in detail with reference to Figs. 3 and 4.

Fig. 4 shows a timing diagram according to an embodiment of this disclosure.

As shown in Fig. 4, at time t1, the fourth transistor Q4 is controlled to turn on by the second control signal CON2, and the voltage on C1 (Fig. 3) gradually rises from 0 V, until it is equal to the voltage 14 V of the first power supply (time t2).

During the interval from time t1 to t2, suppose that a current begins to flow from the floating winding (i.e. a secondary winding of a flyback converter) included in the auxiliary power supply generating means 201, flows in sequence through the first diode D1, third transistor Q3, first transistor Q1, third resistor R3, body diode of security MOSFET Q5, C1 and first power supply (14 V battery system), and finally returns to the floating winding.

On the other hand, when the current has flown in sequence through the first diode D1, third transistor Q3, first transistor Q1, third resistor R3 and body diode of security MOSFET Q5, apart from flowing to C1 as stated above, the current also flows through unit 1 and unit 2, specifically flowing through a shunt resistor shunt1, an inductor L1 and a body diode of a seventh transistor Q7 in unit 1, and a shunt resistor shunt2, an inductor L2 and a body diode of an eighth transistor Q8 in unit 2, and finally returning to the floating winding through C2 and the 14 V battery system.

At time t2, the voltage on C1 is equal to the voltage of the first power supply, i.e. 14 V; thereafter, due to a clamping action of the body diode of the security MOSFET Q6, the voltage on C1 does not rise any more, as shown in Fig. 4.

At time t2, the voltage on C1 and the voltage on C2 do not rise any more. At this time, suppose that current still begins to flow from the floating winding included in the auxiliary power supply generating means 201; then it flows in sequence through the first diode D1, third transistor Q3, first transistor Q1, third resistor R3 and body diode of security MOSFET Q6, and finally returns to the floating winding. This means that the first stage of the pre-charging process ends.

Once the first stage has ended, the voltage on C1 is equal to the voltage 14 V of the first power supply, whereas the voltage on C2 is slightly lower than the voltage on C1, due to shunt resistor shunt1 and the resistance of inductor L1 and the body diode of the seventh transistor Q7 in unit 1 and/or shunt resistor shunt2 and the resistance of inductor L2 and the body diode of the eighth transistor Q8 in unit 2, therefore the two security MOSFETs Q5 and Q6 can be safely turned on, and the problem of magnetizing inrush current is eliminated.

In the second stage of the pre-charging process, a step-up transformer is used to rapidly charge C2 from 14 V to 48 V; the two security MOSFETs Q5 and Q6 are in a conducting state, and serve the function of conducting wires.

In addition, since discrete analogue devices are used to realize the pre-charging circuit, the structure is simple and the cost is low.

According to an embodiment of this disclosure, referring to Fig. 3, a DC-DC converter configured to convert a voltage between a first power supply (e.g. 14 V) and a second power supply (e.g. 48 V) is also provided, comprising a first port, a second port, a first capacitor (C1), a second capacitor (C2) and a security device.

The first port, e.g. a port for the first power supply, is configured to be connected to the first power supply (14 V). The second port, e.g. a port for the second power supply, is configured to be connected to the second power supply (48 V). A converting means is connected between the first and second ports. Here, the converting means is the main circuits of the DC-DC converter, e.g. unit 1 and unit 2. The first capacitor (C1) is connected between the first port and the ground, said ground being configured to be connected to a negative pin of the first power supply and a negative pin of the second power supply. The second capacitor (C2) is connected between the second port and the ground. The security device is connected to the first port and configured to be connected to the first power supply and the pre-charging circuit 200 described above. The security device is e.g. two common-source security MOSFETs as shown in Fig. 3.

The first capacitor is pre-charged by the pre-charging circuit 200.

In one example, the security device comprises two common-source security MOSFETs, and the pre-charging circuit 200 is connected to a middle point of the two security MOSFETs.

In addition, an embodiment of this disclosure also provides a hybrid vehicle comprising a DC-DC converter as described above.

It should be noted that for clarity and simplicity, only parts relevant to embodiments of the present invention are shown in Figs. 2 and 3. However, those skilled in the art should understand that the apparatuses or devices shown in Figs. 2 and 3 may comprise other necessary units.

The embodiments above are merely particular embodiments of the present invention, but the scope of protection of the present invention is not limited to this. Changes or substitutions which could be readily thought of by any person skilled in the art within the technical scope of disclosure of the present invention shall be included in the scope of protection of the present invention. Thus, the scope of protection of the claims shall be regarded as the scope of protection of the present invention.

## Claims

1. A system comprising:
a DC-DC converter (unit 1, unit 2, C1, C2, Q5, Q6),and a pre-charging circuit (200), wherein
the DC-DC converter comprises:
a security device (Q5, Q6), and
wherein the pre-charging circuit comprises:
an auxiliary power supply generating means (201), which is connectable to a first power supply (P14V), and configured to generate an auxiliary power supply;
a constant current source circuit (203) configured to supply a charging current based on the auxiliary power supply; and
a switch part (202) connected between the auxiliary power supply generating means and the constant current source circuit,
wherein an output terminal of the constant current source circuit is connected to the security device of the DC-DC converter, and
wherein the security device comprises two common-source security MOSFETs, and the output terminal of the constant current source circuit is connected to a middle point of the two security MOSFETs.

2. The system of claim 1, wherein the auxiliary power supply generating means comprises a half-wave rectification circuit, and a reference ground of the auxiliary power supply is connectable to a positive terminal of the first power supply.

3. The system of claim 2, wherein the half-wave rectification circuit comprises:
a floating winding, a first terminal of the floating winding is connectable to the first power supply and a second terminal thereof is connected with an anode of a first diode;
the first diode, a cathode of the first diode is connected with the switch part; and
a capacitor connected between the first terminal of the floating winding and the cathode of the first diode.

4. The system of claim 2 or 3, wherein the auxiliary power supply generating means comprises a flyback converter, which in the case of claim 3 includes the floating winding and the first diode, having a secondary side forming its output, and a primary side of the flyback converter is connectable to the first power supply.

5. The system of any one of claims 1-4, wherein the constant current source circuit comprises:
a first resistor, a first terminal thereof is connected to the switch part and a second terminal thereof is connected to a control terminal of a first transistor;
a second resistor, a first terminal thereof is connected to a second terminal of the first transistor and a second terminal of the second resistor is connected to a control terminal of a second transistor;
a third resistor, a first terminal thereof is connected to the second terminal of the first transistor and a second terminal thereof, as the output terminal of the constant current source circuit, is connected to the security device;
the first transistor, a first terminal thereof is connected to the first terminal of the first resistor; and
the second transistor, a first terminal thereof is connected to the second terminal of the first resistor and a second terminal of the second transistor is connected to the second terminal of the third resistor.

6. The system of any one of claims 1-5, wherein the switch part comprises:
a third transistor, a first terminal thereof is connected to the constant current source circuit, a second terminal thereof is connected to the auxiliary power supply generating means and a control terminal thereof is configured to receive a first control signal;
a fourth transistor, a second terminal thereof is connectable to a reference ground and a control terminal thereof is configured to receive a second control signal; and
a fourth resistor and a fifth resistor, connected between the second terminal of the third transistor and a first terminal of the fourth transistor in series.

7. The system of any one of claims 1-6, wherein both of the first and second transistors are NPN type transistors, the third transistor is a PMOS type transistor and the fourth transistor is a NMOS type transistor.

8. The system of any one of the previous claims in which the DC-DC converter is configured to convert a voltage between the first power supply and a second power supply, comprising :
a first port configured to be connected to the first power supply
a second port configured to be connected to the second power supply
converting means connected between the first and second ports
a first capacitor (C1) connected between the first port and the ground, said ground being configured to be connected to a negative pin of the first power supply and a negative pin of the second power supply;
a second capacitor (C2) connected between the second port and the ground; and
the security device connected to the first port and configured to be connected to the first power supply,
wherein the first capacitor is pre-charged by the pre-charging circuit.

9. A hybrid vehicle comprising the system of any of the previous claims.

## Patentansprüche

1. System, umfassend:
einen DC-DC-Wandler (Einheit 1, Einheit 2, C1, C2, Q5, Q6) und
eine Vorladeschaltung (200), wobei
der DC-DC-Wandler Folgendes umfasst:
eine Sicherheitseinrichtung (Q5, Q6) und
wobei die Vorladeschaltung Folgendes umfasst:
ein Hilfsleistungsversorgung-Erzeugungsmittel (201), das mit einer ersten Leistungsversorgung (P14V) verbindbar ist und dazu ausgelegt ist, eine Hilfsleistungsversorgung zu erzeugen;
eine Konstantstromquellenschaltung (203), die dazu ausgelegt ist, einen Ladestrom basierend auf der Hilfsleistungsversorgung zu liefern; und
einen Schalterteil (202), der zwischen dem Hilfsleistungsversorgung-Erzeugungsmittel und der Konstantstromquellenschaltung geschaltet ist,
wobei ein Ausgangsanschluss der Konstantstromquellenschaltung mit der Sicherheitseinrichtung des DC-DC-Wandlers verbunden ist, und
wobei die Sicherheitseinrichtung zwei Sicherheits-MOSFETs mit gemeinsamer Source umfasst und der Ausgangsanschluss der Konstantstromquellenschaltung mit einem Mittelpunkt der beiden Sicherheits-MOSFETs verbunden ist.

2. System nach Anspruch 1, wobei das Hilfsleistungsversorgung-Erzeugungsmittel eine Halbwellengleichrichtungsschaltung umfasst und eine Referenzmasse der Hilfsleistungsversorgung mit einem positiven Anschluss der ersten Leistungsversorgung verbindbar ist.

3. System nach Anspruch 2, wobei die Halbwellengleichrichtungsschaltung Folgendes umfasst:
eine potenzialfreie Wicklung, wobei ein erster Anschluss der potenzialfreien Wicklung mit der ersten Leistungsversorgung verbindbar ist und ein zweiter Anschluss davon mit einer Anode einer ersten Diode verbunden ist;
die erste Diode, wobei eine Kathode der ersten Diode mit dem Schalterteil verbunden ist; und
einen Kondensator, der zwischen dem ersten Anschluss der potenzialfreien Wicklung und der Kathode der ersten Diode geschaltet ist.

4. System nach Anspruch 2 oder 3,
wobei das Hilfsleistungsversorgung-Erzeugungsmittel einen Sperrwandler umfasst, der im Fall des Anspruchs 3 die potenzialfreie Wicklung und die erste Diode beinhaltet und eine Sekundärseite aufweist, die seinen Ausgang bildet, und eine Primärseite des Sperrwandlers mit der ersten Leistungsversorgung verbindbar ist.

5. System nach einem der Ansprüche 1-4, wobei die Konstantstromquellenschaltung Folgendes umfasst:
einen ersten Widerstand, wobei ein erster Anschluss von diesem mit dem Schalterteil verbunden ist und ein zweiter Anschluss von diesem mit einem Steueranschluss eines ersten Transistors verbunden ist;
einen zweiten Widerstand, wobei ein erster Anschluss von diesem mit einem zweiten Anschluss des ersten Transistors verbunden ist und ein zweiter Anschluss des zweiten Widerstands mit einem Steueranschluss eines zweiten Transistors verbunden ist;
einen dritten Widerstand, wobei ein erster Anschluss von diesem mit dem zweiten Anschluss des ersten Transistors verbunden ist und ein zweiter Anschluss von diesem, als der Ausgangsanschluss der Konstantstromquellenschaltung, mit der Sicherheitseinrichtung verbunden ist;
den ersten Transistor, wobei ein erster Anschluss von diesem mit dem ersten Anschluss des ersten Widerstands verbunden ist; und
den zweiten Transistor, wobei ein erster Anschluss von diesem mit dem zweiten Anschluss des ersten Widerstands verbunden ist und ein zweiter Anschluss des zweiten Transistors mit dem zweiten Anschluss des dritten Widerstands verbunden ist.

6. System nach einem der Ansprüche 1-5, wobei der Schalterteil Folgendes umfasst:
einen dritten Transistor, wobei ein erster Anschluss von diesem mit der Konstantstromquellenschaltung verbunden ist, ein zweiter Anschluss von diesem mit dem Hilfsleistungsversorgung-Erzeugungsmittel verbunden ist und ein Steueranschluss von diesem dazu ausgelegt ist, ein erstes Steuersignal zu empfangen;
einen vierten Transistor, wobei ein zweiter Anschluss von diesem mit einer Referenzmasse verbindbar ist und ein Steueranschluss von diesem dazu ausgelegt ist, ein zweites Steuersignal zu empfangen; und
einen vierten Widerstand und einen fünften Widerstand, die zwischen den zweiten Anschluss des dritten Transistors und einen ersten Anschluss des vierten Transistors in Reihe geschaltet sind.

7. System nach einem der Ansprüche 1-6, wobei sowohl der erste als auch zweite Transistor NPN-Typ-Transistoren sind, der dritte Transistor ein PMOS-Typ-Transistor ist und der vierte Transistor ein NMOS-Typ-Transistor ist.

8. System nach einem der vorangegangenen Ansprüche, bei dem der DC-DC-Wandler dazu ausgelegt ist, eine Spannung zwischen der ersten Leistungsversorgung und einer zweiten Leistungsversorgung umzuwandeln, umfassend:
einen ersten Port, der dazu ausgelegt ist, mit der ersten Leistungsversorgung verbunden zu werden,
einen zweiten Port, der dazu ausgelegt ist, mit der zweiten Leistungsversorgung verbunden zu werden,
ein Umwandlungsmittel, das zwischen dem ersten und zweiten Port geschaltet ist,
einen ersten Kondensator (C1), der zwischen dem ersten Port und der Masse geschaltet ist, wobei die Masse dazu ausgelegt ist, mit einem negativen Stift der ersten Leistungsversorgung und einem negativen Stift der zweiten Leistungsversorgung verbunden zu werden;
einen zweiten Kondensator (C2), der zwischen dem zweiten Port und der Masse geschaltet ist; und
die Sicherheitseinrichtung, die mit dem ersten Port verbunden ist und dazu ausgelegt ist, mit der ersten Leistungsversorgung verbunden zu werden,
wobei der erste Kondensator durch die Vorladeschaltung vorgeladen wird.

9. Hybridfahrzeug, das das System nach einem der vorangegangenen Ansprüche umfasst.

## Revendications

1. Système comprenant :
un convertisseur DC-DC (unité 1, unité 2, C1, C2, Q5, Q6) et
un circuit de précharge (200), dans lequel
le convertisseur DC-DC comprend :
un dispositif de sécurité (Q5, Q6) et
dans lequel le circuit de précharge comprend :
un moyen de génération d'alimentation électrique auxiliaire (201), qui peut être raccordé à une première alimentation électrique (P14V) et configuré pour générer une alimentation auxiliaire ;
un circuit de source de courant constant (203) configuré pour fournir un courant de charge en se basant sur l'alimentation électrique auxiliaire ; et
une partie de commutation (202) raccordée entre le moyen de génération d'alimentation électrique auxiliaire et le circuit de source de courant constant,
dans lequel une borne de sortie du circuit de source de courant constant est raccordée au dispositif de sécurité du convertisseur DC-DC et
dans lequel le dispositif de sécurité comprend deux transistors MOSFET de sécurité de sources communes et la borne de sortie du circuit de source de courant constant est raccordée à un point intermédiaire des deux transistors MOSFET de sécurité.

2. Système selon la revendication 1, dans lequel le moyen de génération d'alimentation électrique auxiliaire comprend un circuit de redressement demi-onde et une masse de référence de l'alimentation électrique auxiliaire peut être raccordée à une borne positive de la première alimentation électrique.

3. Système selon la revendication 2, dans lequel le circuit de redressement demi-onde comprend :
un enroulement flottant, une première borne de l'enroulement flottant peut être raccordée à la première alimentation électrique et une seconde borne de ce dernier est raccordée à une anode d'une première diode ;
la première diode, une cathode de la première diode est raccordée à la partie de commutation ; et
un condensateur raccordé entre la première borne de l'enroulement flottant et la cathode de la première diode.

4. Système selon la revendication 2 ou 3, dans lequel le moyen de génération d'alimentation électrique auxiliaire comprend un convertisseur Flyback, qui, dans le cas de la revendication 3, comprend l'enroulement flottant et la première diode, ayant un côté secondaire formant sa sortie, et un côté primaire du convertisseur Flyback peut être raccordé à la première alimentation électrique.

5. Système selon l'une quelconque des revendications 1 à 4, dans lequel le circuit de source de courant constant comprend :
une première résistance, une première borne de cette dernière est raccordée à la partie de commutation et une seconde borne de cette dernière est raccordée à une borne de commande d'un premier transistor ;
une deuxième résistance, une première borne de cette dernière est raccordée à une seconde borne du premier transistor et une seconde borne de la deuxième résistance est raccordée à une borne de commande d'un deuxième transistor ;
une troisième résistance, une première borne de cette dernière est raccordée à la seconde borne du premier transistor et une seconde borne de cette dernière, en tant que borne de sortie du circuit de source de courant constant, est raccordée au dispositif de sécurité ;
le premier transistor, une première borne de ce dernier est raccordée à la première borne de la première résistance ; et
le deuxième transistor, une première borne de ce dernier est raccordée à la seconde borne de la première résistance et une seconde borne du deuxième transistor est raccordée à la seconde borne de la troisième résistance.

6. Système selon l'une quelconque des revendications 1 à 5, dans lequel la partie de commutation comprend :
un troisième transistor, une première borne de ce dernier est raccordée au circuit de source de courant constant, une seconde borne de ce dernier est raccordée au moyen de génération d'alimentation électrique auxiliaire et une borne de commande de ce dernier est configurée pour recevoir un premier signal de commande ;
un quatrième transistor, une seconde borne de ce dernier peut être raccordée à une masse de référence et une borne de commande de ce de dernier est configurée pour recevoir un second signal de commande ; et
une quatrième résistance et une cinquième résistance, raccordées entre la seconde borne du troisième transistor et une première borne du quatrième transistor en série.

7. Système selon l'une quelconque des revendications 1 à 6, dans lequel à la fois les premier et deuxième transistors sont des transistors de type NPN, le troisième transistor est un transistor de type PMOS et le quatrième transistor est un transistor de type NMOS.

8. Système selon l'une quelconque des revendications précédentes, dans lequel le convertisseur DC-DC est configuré pour convertir une tension entre la première alimentation électrique et une seconde alimentation électrique, comprenant :
un premier port configuré pour être raccordé à la première alimentation électrique,
un second port configuré pour être raccordé à la seconde alimentation électrique,
un moyen de conversion raccordé entre les premier et second ports,
un premier condensateur (C1) raccordé entre le premier port et la masse, ladite masse étant configurée pour être raccordée à une broche négative de la première alimentation électrique et à une broche négative de la seconde alimentation électrique ;
un second condensateur (C2) raccordé entre le second port et la masse ; et
le dispositif de sécurité raccordé au premier port et configuré pour être raccordé à la première alimentation électrique,
dans lequel le premier condensateur est préchargé par le circuit de précharge.

9. Véhicule hybride comprenant le système selon l'une quelconque des revendications précédentes.
